## Europäisches Patentamt

(19) **European Patent Office**

**Office européen des brevets**

(11) Publication number: **0 116 594**
**B1**

(12) ## EUROPEAN PATENT SPECIFICATION

(45) Date of publication of patent specification: **25.01.89**

(21) Application number: **83902674.7**

(22) Date of filing: **04.08.83**

(86) International application number: **PCT/US83/01197**

(87) International publication number: **WO 84/00766 01.03.84 Gazette 84/06**

(51) Int. Cl.⁴: **C 08 G 59/14**

(54) A PROCESS FOR PARTIALLY HYDROLYZING EPOXY RESINS IN THE ABSENCE OF AN ORGANIC SOLVENT AND IN THE PRESENCE OF A DICARBOXYLIC ACID AND A PHOSPHONIUM COMPOUND.

(30) Priority: **16.08.82 US 408348**

(43) Date of publication of application: **29.08.84 Bulletin 84/35**

(45) Publication of the grant of the patent: **25.01.89 Bulletin 89/04**

(84) Designated Contracting States: **CH DE FR GB LI NL SE**

(56) References cited:
US-A-3 405 093
US-A-3 632 836
US-A-3 787 508
US-A-3 991 028
US-A-4 145 324
US-A-4 340 713
US-A-4 358 577

No further relevant documents revealed

The file contains technical information submitted after the application was filed and not included in this specification

(73) Proprietor: **THE DOW CHEMICAL COMPANY 2030 Dow Center Abbott Road P.O. Box 1967 Midland Michigan 48640-1967 (US)**

(72) Inventor: **CAVITT, Michael, Brent 303 South Yaupon Lake Jackson, TX 77566 (US)**

(74) Representative: **Hann, Michael, Dr. et al Patentanwälte Dr. Michael Hann Dr. H.-G. Sternagel Sander Aue 30 D-5060 Bergisch Gladbach 2 (DE)**

EP 0116594 B1

Courier Press, Leamington Spa, England.

## Description

The present invention relates to a method for preparing a hydrolyzed epoxy novolac resin composition.

High molecular weight polyepoxide resins have been made more reactive by blending with a hydrolyzed or partially hydrolyzed low molecular weight or high molecular weight epoxy resin as disclosed by Walker in U.S. 3,632,836.

Hydrolyzed and partially hydrolyzed epoxy resins have been prepared by dissolving the epoxy resin to be hydrolyzed in an inert organic solvent, admixing the resultant solution with a dilute aqueous solution of an acid catalyst, heating to a temperature of from 50°C to 374°C, washing to remove the acid catalyst and distilling the solvent to recover the hydrolyzed epoxy resin product. Such process is disclosed by Walker in US—A—3,405,093, US—A—3,632,836 and US—A—3,787,508.

Such process requires the necessity for removing and recovering large quantities of an organic solvent therefrom.

US—A—4,340,713 refers to a process for preparing high molecular weight epoxy resin compositions containing hydrolyzed epoxy groups during the preparation of the high weight epoxy resin in the absence of an organic solvent. Suitable low molecular weight epoxy resins are glycidyl ether or polyhydric aliphatic, cycloaliphatic and aromatic compounds, glycidylesters of polycarboxylic acids. The hydrolysis occurs before the reaction between the low molecular weight epoxy resin and the dihydric phenol.

WO 82 01878 describes the preparation of high molecular weight epoxy resins containing hydrolyzed glycidyl-groups by reacting a low molecular weight epoxy reson and a hydroxyl containing compound in the presence of water, a hydrolysis catalyst and a catalyst effecting the reaction between the epoxy resin and the hydroxyl containing compound. The amount of water employed is in excess of that amount theoretically required to totally hydrolyze all of the epoxy groups.

Suitable low molecular weight epoxy resins include glycidyl ethers of polyhydric aliphatic, cycloaliphatic and aromatic compounds, glycidyl esters of polycarboxylic acids and mixtures thereof.

It is the object of the invention to provide a method for preparing partially hydrolyzed epoxy novolac resins which are compatible with specific curing agents in coating compositions instead of a blend of fully hydrolyzed with non-hydrolyzed polyepoxides.

This object is solved by process for partially hydrolyzing an epoxy resin by reacting said epoxy resin with water in the absence of substantial quantities of an organic solvent and in the presence of a catalytic quantity of a catalyst comprising (1) at least one dicarboxylic acid and (2) at least one phosphonium compound wherein the molar ratio of (1) to (2) is from 1:1 to 20:1 which is characterized in that the reaction took place in the absence of a polyhydric phenol and the epoxy novolac resin is a phenol-formaldehyde epoxy novolac resin or a cresol-formaldehyde epoxy novolac resin and the degree of hydrolysis is about 11 to 12% of the epoxy groups.

The molar ratio of (1) to (2) is preferably from 3:1 to 10:1, most preferably from 5:1 to 7:1.

The present invention not only eliminates the need for removing large quantities of organic solvent, but reduces the time required to reach the desired level of hydrolysis.

Any epoxy resin which is a glycidyl ether of a polyhydric aromatic or aliphatic compound type can be hydrolyzed by the process of the present invention. Such resins are fully described in *Handbook of Epoxy Resins* by Lee and Neville, McGraw-Hill 1967. Particularly suitable epoxy resins which can be hydrolyzed by the process of the present invention include, for example, the glycidyl ethers of bisphenols and novolac resins.

Suitable dicarboxylic acids which can be employed herein include those having from 2 to 10, preferably from 2 to 6, most preferably from 2 to 4, carbon atoms, such as, for example, oxalic acid, malonic acid, succinic acid, glutaric acid, adipic acid, pimelic acid, suberic acid, azelaic acid, sebacic acid, and mixtures thereof. Also suitable are the hydrates of the aforementioned acids.

Suitable phosphonium catalysts which can be employed with the dicarboxylic acid in the present invention for hydrolyzing epoxy resins include, for example, those disclosed by Perry in US—A—3,948,855 or by Dante in US—A—3,477,990. Particularly suitable phosphonium catalysts include, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate · acetic acid complex), tetrabutylphosphonium chloride, tetrabutylphosphonium bromide, tetrabutylphosphonium iodide, tetrabutylphosphonium acetate and tetrabutylphosphonium diacetate (tetrabutylphosphonium acetate · acetic acid complex). The total quantity of catalyst varies depending upon the conditions employed, but is advantageously from 0.001 to 0.01, preferably from 0.003 to 0.008 mole of total catalyst per epoxide equivalent contained in the resin or resins to be hydrolyzed. Higher quantities can be employed, but no beneficial results are obtained.

The process of the present invention is conducted at temperatures of from 50°C to 200°C, preferably from 110°C to 150°C for a period of time to reach the desired degree of hydrolysis.

The amount of water employed is dependent upon the desired degree of hydrolysis, but usually from 0 to 100, preferably from 0 to 30, most preferably from 0 to 5 percent in excess of the theoretical amount of water required for hydrolysis is employed.

The following examples are illustrative of the invention.

The following components were employed in the examples.

Catalyst A is a 70 weight weight solution of ethyltriphenyl phosphonium acetate · acetic acid complex in methanol.

Catalyst B is oxalic acid · $2H_2O$.

Epoxy Resin B is a phenol-formaldehyde epoxy novolac resin having an average epoxide functionality of 3.6 and an average EEW of 181.

Epoxy Resin C is a cresol-formaldehyde epoxy novolac resin having an average epoxide functionality of 5.7 and an average EEW of 228.

Epoxy Resin D is a phenol-formaldehyde epoxy novolac resin having an average epoxide functionality of 2.2 and an average EEW of 180.

Curing Agent A is a reaction product of a polyfunctional carboxylic acid and a polyalkylenepolyamine with an amine hydrogen equivalent weight of 170 commercially available from Henkel Corp. under the tradename VERSAMID 115.

Curing Agent B is a polyalkylenepolyamine with an amine hydrogen equivalent weight of 24.4.

The following components were employed to evaluate coating performance on cold rolled steel panels using the resin examples.

Coating Formulation A was made up of two parts. Part 1 contained the resin and Part 2 contained the curing agent. Part 1 and 2 were mixed and given an induction time of one hour (3600 s) at 25°C. At the end of one hour (3600 s), the coating was made. Part 1 was composed of 100 parts resin, 72 parts methyl isobutyl ketone, 37 parts of the methyl ether of propylene glycol and 1.7 parts of a urea-formaldehyde resin that is 60 percent N.V. in butanol and xylol. Part 2 was composed of 120 parts xylene and 80 parts of curing agent A. All parts were based on mass. This formulation was used to coat steel panels and there were allowed to cure at ambient temperature for 7 days (604,800 s).

Coating Formulation B was made up of 100 parts resin, 109 parts of methyl ethyl ketone, 1.7 parts of a urea-formaldehyde resin that is 60 percent N.V. in butanol and xylol and a stoichiometric amount of curing agent B. All parts were based on mass. When all parts were mixed together, a coating was prepared and allowed to cure at ambient temperature for 7 days (604,800 s).

Coatings made from the epoxy resins were evaluated by the following tests.

MEK double rubs

To the ball end of a 2 lb. (0.9 kg) ball pein hammer was attached a pad of cheese cloth composed of 8 plys. The pad was saturated with methyl ethyl ketone (MEK) and then rubbed across a coated substrate. As constant back and forth motion is used allowing only the weight of the hammer to apply force on the coating. A back and forth movement counts as one double rub. This motion is continued until the coating is marred and/or begins to be removed by the solvent effect.

Pencil hardness

This procedure can be found in *Paint Testing Manual* by H. A. Gardner and G. G. Sward in the 12th edition (1962) pages 131 and 132. One part was modified. When the coating is broken to the metal surface, that constitutes a failure. The results reported here are a pencil hardness that does not break the film but the next harder pencil grade does break film.

Glacial acetic acid spot test

A coating that has been applied to a substrate and cured such as cold rolled steel can be tested for chemical resistance. In this test glacial acetic acid ($\cong$1 ml) is placed on the coating. A timer is started. When the coating delaminates from the substrate, failure has occurred and the timer stopped. This time that has been recorded is then called time to failure for glacial acetic acid.

Example 1

A 2 liter pressure reactor was charged in order, with 700 g (3.888 epoxy equivalents) of epoxy resin B, 1.30 g (0.002 mole) of catalyst A, 9.60 g (0.533 mole) of water and 2 g (0.016 mole) of catalyst B. The molar ratio of catalyst B to catalyst A was 8:1. The reactor was sealed, purged with nitrogen and left with a 24 psig (165.5 kPa gage pressure) of nitrogen. The contents were heated to 134°C in 0.57 hour (2052 s) and maintained at 140°C for 1.02 hour (3672 s). The reactor was then heated to 190°C and the temperature maintained at 190°C under a vacuum for 0.5 hour (1800 s). The resultant product had 12 percent of the epoxy groups hydrolyzed.

Coating formulations A and B were prepared from the above prepared hydrolyzed epoxy resin B. For coating formulation A after curing, the pencil hardness was H, the MEK double rubs were more than 200 and the glacial acetic acid spot test required 360 seconds. For coating formulation B after curing, the pencil hardness was F and the MEK double rubs were more than 200. The glacial acetic acid spot test was not run. For the pencil hardness test, the values going from poorest to best are: 6B, 5B, 4B, 3B, 2B, B, HB, F, H, 2H, 3H, 4H, 5H and 6H.

Comparative experiment C

A 2 liter pressure reactor was charged in order, with 431 g (2.385 epoxy equivalents) of epoxy resin B, 6.42 g (0.011 mole) of catalyst A, 6.19 g (0.344 mole) of water. The reactor was sealed, purged with nitrogen and left with a (20 psig) 137.9 kPa gage pressure of nitrogen. The contents were heated to 135°C in 0.53 hour (1908 s) and maintained at 139°C for 1 hour (3600 s). The reactor was then heated to 190°C and the temperature maintained at 190°C under a vacuum for 0.52 hour (1872 s). The resultant product had essentially none of the epoxy groups hydrolyzed.

Comparative experiment D

A 2 liter pressure reactor was charged in order, with 863 g (4.775 epoxy equivalents) of epoxy resin B, 11.6 g (0.644 mole) of water and 2.76 g (0.022 mole) of catalyst B. The reactor was sealed, purged with nitrogen and left with a 22 psig (151.7 kPa gage pressure) of nitrogen. The contents were heated to 132°C in 0.6 hour (2160 s) and maintained at 133°C for 1 hour (3600 s). The reactor was then heated to 190°C and the temperature maintained at 192°C under a vacuum for 0.58 hour (2088 s). The resultant product had essentially none of the epoxy groups hydrolyzed.

Example 2

A 2 liter pressure reactor was charged in order, with 485 g (2.126 epoxy equivalents) of epoxy resin C, 0.81 g (0.001 mole) of catalyst A, 5.61 g (0.312 mole) of water and 1.10 g (0.009 mole) of catalyst B. The molar ratio of catalyst B to catalyst A was 9:1. The reactor was sealed, purged with nitrogen and left with a (20 psig) 137.9 kPa gage pressure of nitrogen. The contents were heated to 133°C in 0.72 hour (2592 s) and maintained at 133°C for 1.5 hour (5400 s). The reactor was then heated to 180°C and the temperature maintained at 185°C under a vacuum for 0.33 hour (1188 s). The resultant product had 11 percent of the epoxy groups hydrolyzed.

Example 3

A 2 liter pressure reactor was charged in order, with 1000 g (5.563 epoxy equivalents) of epoxy resin D, 2.01 (0.003 mole) of catalyst A, 9.8 g (0.544 mole) of water and 2.8 g (0.022 mole) of catalyst B. The molar ratio of catalyst B to catalyst A was 7.3:1. The reactor was sealed, purged with nitrogen and left with a (20 psig) 137.9 kPa gage pressure of nitrogen. The contents were heated to 134°C in 1 hour (3600 s) and maintained at 132°C for 1.38 hour (4968 s). The reactor was then heated to 170°C and the temperature maintained at 180°C under a vacuum for 0.5 hour (1800 s). The resultant product had 11 percent of the epoxy groups hydrolyzed.

Claims

1. A process for partially hydrolyzing an epoxy resin by reacting said epoxy resin with water in the absence of substantial quantities of an organic solvent and in the presence of a catalytic quantity of a catalyst comprising (1) at least one dicarboxylic acid and (2) at least one phosphonium compound wherein the molar ratio of (1) to (2) is from 1:1 to 20:1, characterized in that the reaction took place in the absence of a polyhydric phenol and the epoxy novolac resin is a phenol-formaldehyde epoxy novolac resin or a cresol-formaldehyde epoxy novolac resin and the degree of hydrolysis is about 11 to 12% of the epoxy groups.

2. The process of claim 1, characterized in that the component (1) has from 2 to 10 carbon atoms and the total quantity of catalyst is from 0.001 to 0.01 moles of catalyst per epoxide equivalent.

3. The process of claim 2, characterized in that component (1) has from 2 to 6 carbon atoms; the total quantity of catalyst is from 0.003 to 0.008 moles of catalyst per epoxide equivalent.

4. The process of claim 2, characterized in that said dicarboxylic acid is oxalic acid or a hydrate thereof and said phosphonium compound is ethyltriphenylphosphonium acetate acetic acid complex.

Patentansprüche

1. Verfahren zum teilweisen Hydrolisieren eines Epoxyharzes durch Umsetzen des Epoxyharzes mit Wasser in Abwesenheit wesentlicher Mengen eines organischen Lösungsmittels und in Gegenwart einer katalytischen Menge eines Katalysators, enthaltend (1) mindestens eine Dicarbonsäure und (2) mindestens eine Phosphoniumverbindung, wobei das Molverhältnis von (1):(2) von 1:1 bis 20:1 beträgt, dadurch gekennzeichnet, daß die Umsetzung in Abwesenheit eines mehrwertigen Phenols abläuft und das Epoxyharz ein Phenol-Formaldehyd-Epoxy-novolakharz oder ein Kresol-Formaldehyd-Epoxynovolakharz ist und der Hydrolysergrad etwa 11—12% der Epoxygruppen beträgt.

2. Verfahren nach Anspruch 1, dadurch gekennzeichnet, daß der Bestandteil (1) von 2 bis 10 Kohlenstoffatome aufweist und die Gesamtmenge des Katalysators von 0,001 bis 0,01 Molen Katalysator pro Epoxiäquivalent beträgt.

3. Verfahren nach Anspruch 2, dadurch gekennzeichnet, daß der Bestandteil (1) von 2 bis 6 Kohlenstoffatome aufweist und die Gesamtmenge des Katalysators von 0,003 bis 0,008 Mole Katalysator pro Epoxiäquivalent beträgt.

4. Verfahren nach Anspruch 2, dadurch gekennzeichnet, daß die Dicarbonsäure Oxalsäure oder ein Hydrat derselben ist und die Phosphoniumverbindung Ethyltriphenylphosphoniumacetat-Essigsäurekomplex ist.

Revendications

1. Procédé pour l'hydrolyse partielle d'une résine époxy par réaction de ladite résine époxy avec de l'eau, en l'absence de quantités importantes d'un solvant organique et en présence d'une quantité catalytique d'un catalyseur comprenant (1) au moins un acide dicarboxylique et (2) au moins un composé phosphonium, le rapport molaire de (1) à (2) étant de 1:1 à 20:1, caractérisé en ce que la réaction a lieu en l'absence d'un phénol polyhydroxylé et la résine époxy novolac est une résine époxy novolac phénolformaldéhyde ou une résine époxy novolac crésol-formaléhyde, et le degré d'hydrolyse est d'environ 11 à 12% des groupes époxyde.

2. Procédé conforme à la revendication 1, caractérisé en ce que le composant (1) comporte de 2 à 10 atomes de carbone, et la quantité totale de catalyseur est de 0,001 à 0,01 mole de catalyseur par équivalent époxyde.

3. Procédé conforme à la revendication 2, caractérisé en ce que le composant (1) comporte de 2 à 6 atomes de carbone, et la quantité totale de catalyseur est de 0,003 à 0,008 mole de catalyseur par équivalent époxyde.

4. Procédé conforme à la revendication 2, caractérisé en ce que ledit acide dicarboxylique est l'acide oxalique ou un hydrate de celui-ci, et ledit composé phosphonium est un complexe d'acide acétique et d'acétate d'éthyltriphényl-phosphonium.